Europäisches Patentamt

European Patent Office

Office européen des brevets

(19)

(11) Numéro de publication : **0 064 448
B1**

(12) **FASCICULE DE BREVET EUROPÉEN**

(45) Date de publication du fascicule du brevet :
17.07.85

(51) Int. Cl.⁴ : **B 60 P 3/08**, B 60 P 1/00

(21) Numéro de dépôt : 82400730.6

(22) Date de dépôt : 23.04.82

(54) **Dispositif d'accès à un véhicule de transport de véhicules routiers.**

(30) Priorité : 23.04.81 FR 8108110

(43) Date de publication de la demande :
10.11.82 Bulletin 82/45

(45) Mention de la délivrance du brevet :
17.07.85 Bulletin 85/29

(84) Etats contractants désignés :
AT BE CH DE FR GB IT LI LU NL SE

(56) Documents cités :
DE-A- 1 455 934
DE-C- 898 554
FR-A- 2 202 840
US-A- 2 100 694
US-A- 2 892 656

(73) Titulaire : REMAFER - SOCIETE DE CONSTRUCTION
ET DE REPARATION DE MATERIEL FERROVIAIRE
3, rue Christophe Colomb
F-75008 Paris (FR)

(72) Inventeur : Querel, Jean
58 rue Henry Farman
F-51450 Betheny (FR)

(74) Mandataire : Saint-Martin, René
CREUSOT-LOIRE 15 rue Pasquier
F-75383 Paris Cedex 08 (FR)

EP 0 064 448 B1

Jouve, 18, rue St-Denis, 75001 Paris, France

## Description

La présente invention se rapporte à un dispositif d'accès, à partir d'une aire de chargement ou de déchargement, à un véhicule de transport de véhicules routiers comportant une plate-forme inférieure et une plate-forme supérieure pourvue d'au moins un plancher orientable qui pivote autour d'un axe horizontal et transversal et qui coopère avec deux rampes d'accès faisant la jonction avec l'aire de chargement ou de déchargement.

Pour le chargement ou le déchargement d'un véhicule de transport du type précédent, le plancher orientable est incliné de manière que le bord extérieur soit abaissé par rapport au sol de l'aire de chargement ou de déchargement. La continuité entre le sol et l'extrémité du plancher orientable est assurée par des rampes. Dans le brevet DE-C-898 554 les rampes sont volantes ce qui pose des problèmes de manipulation.

Le brevet FR-A-2 202 840 décrit un véhicule de transport comportant deux rampes d'accès coulissantes. Ces rampes se logent à l'intérieur de la plate-forme de chargement, sous la surface de roulement. Il faut une construction particulière de la plate-forme et les rampes encombrent l'espace sous la surface de chargement.

La présente invention a pour but de fournir un dispositif d'accès dans lequel les rampes viennent se rabattre en fonction de repos sur la surface de chargement entre les roues des véhicules transportés. La construction du plancher est simplifiée et allégée et l'espace sous le plancher est dégagé ce qui est favorable pour l'accès des véhicules transportés au niveau inférieur. Les rampes d'accès sont incorporées au véhicule et montées à demeure sur les planchers orientables des extrémités. Ce dispositif permet des manipulations faciles avec un nombre réduit d'opérateurs et sans aucun moyen de manutention. Il permet au repos de loger les rampes entre les roues des véhicules. Il procure une autonomie pour l'accès des véhicules automobiles sur la plate-forme supérieure dans toutes les gares disposant d'un quai avec un boutoir dont la hauteur correspond au niveau de la plate-forme inférieure des wagons. Ce dispositif permet d'effectuer la desserte des gares de petites et moyennes importances.

Le dispositif selon l'invention est caractérisé par le fait que chaque rampe d'accès est liée au plancher orientable par des moyens de guidage de manière qu'elle puisse coulisser selon la direction longitudinale par rapport audit plancher orientable entre une position escamotée dans laquelle elle se trouve sur le plancher orientable et une position déployée où elle fait la jonction entre l'aire de chargement ou de déchargement et l'extrémité dudit plancher orientable et qu'elle est reliée auxdits moyens de guidage par l'intermédiaire de moyens d'articulation permettant son pivotement autour d'un axe longitudinal entre une position rabattue sur le plancher et une position déployée où elle peut être utilisée comme piste de roulement.

Selon une caractéristique, les moyens de guidage sont constitués par deux coulisseaux indépendants qui sont guidés sur deux rails de guidage fixés longitudinalement sur le plancher orientable.

Selon une caractéristique, chaque rampe est réunie à un coulisseau par une charnière située près du bord supérieur de la rampe.

L'invention va maintenant être décrite avec plus de détails en se référant à un mode de réalisation donné à titre d'exemple et représenté par les dessins annexés.

La figure 1 est une vue en élévation d'une extrémité d'un véhicule de transport équipé d'un dispositif d'accès conforme à l'invention, ce dernier étant escamoté sur le plancher orientable.

La figure 2 est une vue en élévation dans laquelle le dispositif d'accès est déployé jusqu'à l'aire de chargement ou de déchargement.

La figure 3 est une vue de dessus de la figure 2.

La figure 4 est une coupe selon A-A de la figure 1.

La figure 5 est une coupe selon B-B des figures 2 et 3.

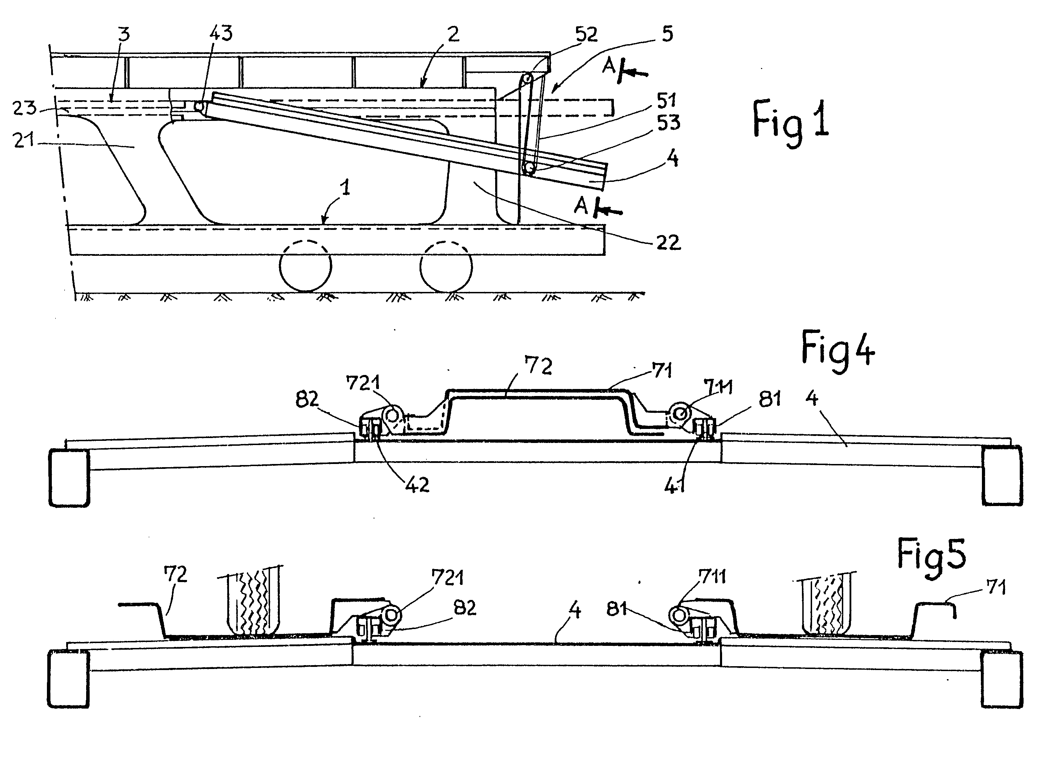

Les figures 1 à 3 représentent une extrémité d'un véhicule de type ferroviaire destiné au transport de véhicules routiers. Ce véhicule comporte, au-dessus des essieux, un châssis sur lequel repose la plate-forme inférieure 1. Le châssis est solidaire d'une super-structure 2 s'étendant de deux côtés de la plate-forme inférieure. Cette super-structure est constituée par des montants 21, 22 réunis par des longerons 23. Cette super-structure supporte une plate-forme supérieure 3 qui est fixe. La plate-forme supérieure s'étend sur une longueur inférieure à la longueur occupée par la plate-forme inférieure. Deux planchers orientables 4 prolongent la plate-forme supérieure 3 à ses extrémités. Chaque plancher orientable 4 peut pivoter autour d'un axe horizontal et transversal 43 situé au niveau de la plate-forme supérieure. Ce plancher orientable peut ainsi osciller entre une position horizontale utilisée pendant le transport et représentée en pointillés sur la figure 1 et une position inclinée utilisée pendant le chargement ou déchargement et représentée en traits pleins sur la même figure. En position horizontale, le plancher orientable est immobilisé par un système de verrouillage constitué par exemple par des broches de verrouillage traversant les montants. En position inclinée, le plancher orientable repose sur des butées de fin de course. Dans cette position inclinée, le bord extérieur du plancher orientable est rapproché de la plate-forme inférieure. Le pivotement du plancher orientable est commandé par un mécanisme de levage 5 qui agit sur les deux côtés latéraux du plancher. Ce mécanisme de levage comporte des câbles 51 qui s'enroulent sur des poulies 52, 53 en formant un mouflage. Chaque câble est attaché par un de ses bouts à la super-structure, l'autre bout étant tracté par un treuil. Dans la position intermédiaire entre la position horizontale et la position inclinée de fin de course, le plancher orientable est suspendu aux câbles 51.

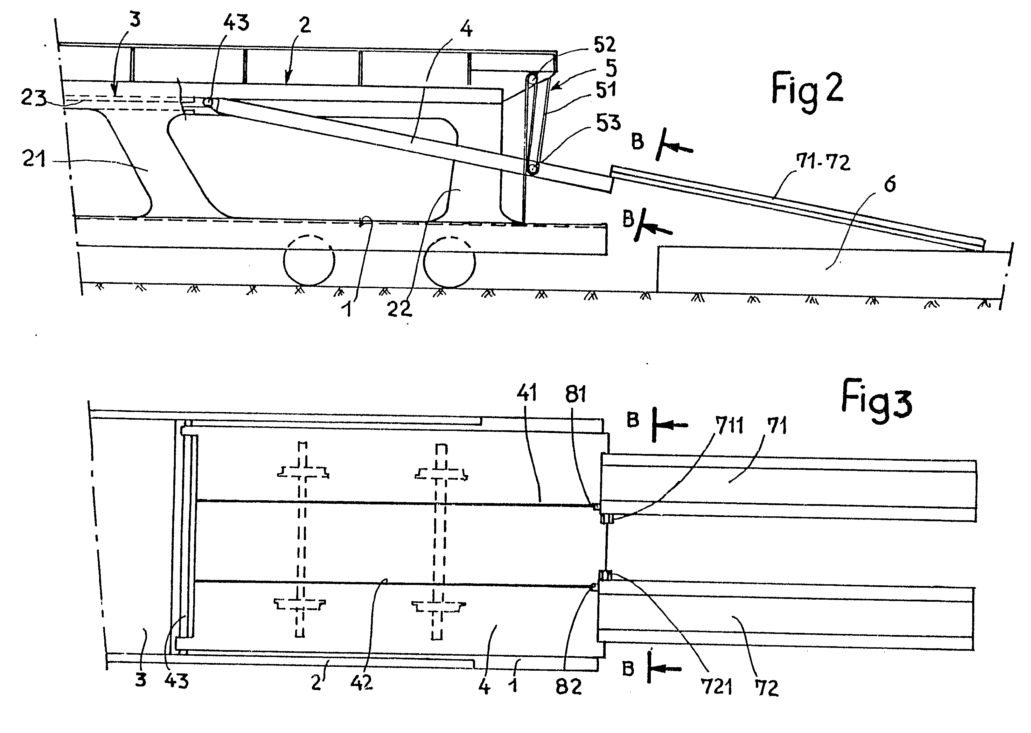

Le dispositif d'accès comporte deux rampes 71 et 72 qui font la jonction entre l'aire de chargement ou de déchargement 6 (sol du quai) et le plancher orientable. Chaque rampe 71 ou 72 est assujettie à coulisser par rapport au plancher orientable 4 selon une direction longitudinale parallèle à ce plancher donc perpendiculaire à l'axe de rotation 43. Elle peut occuper deux positions de fin de course. En fin de course haute ou position de repos elle est escamotée sur le plancher orientable (figure 1). En fin de course basse elle occupe une position déployée ou d'utilisation (figure 2). Dans cette position elle fait la jonction entre l'aire 6 et le plancher, le bord inférieur reposant sur l'aire de chargement ou de déchargement et le bord supérieur reposant à l'extrémité du plancher orientable. Chaque rampe est réunie à un coulisseau 81 ou 82 assujetti à se déplacer selon un rail longitudinal 41 ou 42. Chaque rampe peut pivoter autour d'un axe longitudinal parallèle à la direction de coulissement. En position haute de repos elle occupe une position rabattue vers le centre du plancher (figures 1 et 4) telle que la piste de roulement soit orientée face audit plancher 4. En position basse chaque piste occupe une position déployée vers l'extérieur (figures 2, 3 et 5) où elle peut être utilisée comme piste de roulement pendant le chargement ou le déchargement.

Pour permettre le pivotement, chaque rampe 71 ou 72 est réunie au coulisseau 81 ou 82 par une charnière 711 ou 721 (de type articulation cylindrique ou rotule). La charnière est de préférence prévue prés du bord supérieur de la rampe. Les deux rails de guidage 41 et 42 sont fixés longitudinalement au-dessus du plancher orientable 4, symétriquement par rapport à l'axe longitudinal du wagon. Les deux charnières 711 et 721 permettent le pivotement des rampes par rapport aux coulisseaux autour des axes longitudinaux précités. Chaque coulisseau est guidé par des galets ou des roulements sur le rail de guidage. Une butée de sécurité immobilise les rampes en position de repos.

Chaque rampe 71 ou 72 a la forme d'une gouttière en U qui tourne sa concavité vers le haut en position d'utilisation (position déployée des figures 2, 3, 5) ou vers le bas en position de repos (figures 1, 4). Les sections des gouttières formant les rampes 71 et 72 sont telles que ces deux rampes peuvent être rabattues l'une sur l'autre. L'écartement des rails et des coulisseaux est inférieur à l'écartement entre les roues des véhicules transportés de façon que les rampes puissent être engagées entre ces roues. Les rampes sont rabattues l'une sur l'autre toujours dans le même ordre, la disposition des charnières et des poignées empêchant toute inversion. En position de repos les deux rampes 71 et 72 sont rabattues l'une vers l'autre entre les deux rails ou coulisseaux de manière à occuper une largeur inférieure à l'écartement des roues des véhicules transportés. Ainsi, les rampes peuvent être engagées entre les roues de ces véhicules. En position d'utilisation, les deux rampes sont positionnées de part et d'autre des rails.

Le fonctionnement du dispositif va maintenant être expliqué.

Pour réaliser le chargement ou le déchargement des véhicules routiers, le véhicule de transport est amené à proximité d'un butoir en bout de quai. Le plancher orientable 4 situé du côté du quai est abaissé jusqu'à ce qu'il repose sur les butées de fin de course, le bord extérieur se trouvant alors à hauteur d'homme (figure 1). Les deux rampes mobiles 71 et 72 sont alors rabattues l'une sur l'autre sur le plancher orientable 4 (position de repos). L'opérateur déverrouille la butée de sécurité des rampes. Il soulève la rampe du dessus par son extrémité inférieure pour la dégager de la rampe de dessous sur laquelle elle reposait. Il fait descendre la rampe en direction du quai. La rampe est alors guidée à son extrémité supérieure par le coulisseau qui descend le long du rail de guidage associé. Lorsque la rampe est en fin de course, l'opérateur la retourne de 180° pour la poser sur le quai (figure 2). L'opérateur renouvelle les mêmes opérations pour la seconde rampe. A la fin de la manœuvre les deux rampes reposent sur le quai parallèlement de manière que l'écartement nécessaire à l'accès des véhicules routiers soit respecté.

## Revendications

1. Dispositif d'accès, à partir d'une aire de chargement ou de déchargement (6), à un véhicule de transport de véhicules routiers comportant une plate-forme inférieure (1) et une plate-forme supérieure (3) pourvue d'au moins un plancher orientable (4) qui pivote autour d'un axe horizontal et transversal (43) et qui coopère avec deux rampes d'accès (71, 72) faisant la jonction avec l'aire de chargement ou de déchargement caractérisé par le fait que chaque rampe d'accès (71, 72) est liée au plancher orientable (4) par des moyens de guidage (81-82, 41-42) de manière qu'elle puisse coulisser selon une direction longitudinale par rapport au dit plancher orientable entre une position escamotée dans laquelle elle se trouve sur le plancher orientable et une position déployée où elle fait la jonction entre l'aire de chargement ou de déchargement (6) et l'extrémité dudit plancher orientable et qu'elle est reliée aux dits moyens de guidage (81, 82) par l'intermédiaire de moyens d'articulation (711, 721) permettant son pivotement autour d'un axe longitudinal entre une position rabattue sur le plancher et une position déployée où elle peut être utilisée comme piste de roulement.

2. Dispositif selon la revendication 1, caractérisé par le fait que les moyens de guidage sont constitués par deux coulisseaux (81, 82) indépendants qui sont guidés sur deux rails de guidage (41, 42) fixés longitudinalement sur le plancher orientable (4).

3. Dispositif selon l'une quelconque des revendications précédentes, caractérisé par le fait que chaque rampe (71, 72) est réunie à un coulisseau (81, 82) par une charnière (711, 721) située près du bord supérieur de la rampe (71, 72).

4. Dispositif selon l'une quelconque des revendications précédentes, caractérisé par le fait que chaque rampe (71, 72) a une forme en U permettant aux dites rampes d'être rabattues l'une sur l'autre entre les rails (41, 42).

5. Dispositif selon l'une quelconque des revendications précédentes, caractérisé par le fait que l'écartement des rails et des coulisseaux est inférieur à l'écartement des roues des véhicules transportés de manière que les rampes puissent être engagées entre ces roues.

## Claims

1. Device allowing access, from a loading or unloading bay (6), to a road-vehicle transport vehicle possessing a lower platform (1) and an upper platform (3) provided with at least one orientable floor (4) which pivots about a horizontal and transverse axle (43) and which interacts with two access ramps (71, 72) forming the junction with the loading or unloading bay, characterised in that each access ramp (71, 72) is connected to the orientable floor (4) by guide means (81-82, 41-42), in such a way that it can slide in a longitudinal direction relative to the said orientable floor between a retracted position, in which it is located on the orientable floor, and an extended position, in which it forms the junction between the loading or unloading bay (6) and the end of the said orientable floor, and in that it is connected to the said guide means (81, 82) via articulation means (711, 721) which allow it to pivot about a longitudinal axle between a position in which it is folded down on the floor and an extended position in which it can be used as a rolling track.

2. Device according to Claim 1, characterised in that the guide means consist of two independent slides (81, 82) which are guided on two guide rails (41, 42) fastened longitudinally to the orientable floor (4).

3. Device according to either one of the preceding Claims, characterised in that each ramp (71, 72) is connected to a slide (81, 82) by means of a hinge (711, 721) located near the upper edge of the ramp (71, 72).

4. Device according to any one of the preceding Claims, characterised in that each ramp (71, 72) has a U-shape allowing the said ramps to be folded down on one another between the rails (41, 42).

5. Device according to any one of the preceding Claims, characterised in that the distance between the rails and between the slides is less than the distance between the wheels of the transported vehicles, so that the ramps can be engaged between these wheels.

## Patentansprüche

1. Zu- bzw. Auffahrtsvorrichtung ausgehend von einer Lade- oder Entladefläche (6) zu einem Transportfahrzeug für Straßenfahrzeuge, das eine unter Plattform (1) und eine obere Plattform (3) umfaßt, welche Vorrichtung mit mindestens einer verstellbaren bzw. orientierbaren Bühne (4) ausgerüstet ist, die um eine horizontale und transversale Achse (43) drehbar ist und die mit zwei Zu- bzw Auffahrtsrampen (71, 72), die die Verbindung mit der Lade- oder Entladefläche herstellen, kooperiert, dadurch gekennzeichnet, daß jede Zu- bzw. Auffahrtsrampe (71, 72) mit der verstellbaren Bühne (4) durch Führungsmittel (81-82, 41-42) so verbunden ist, daß sie in Längsrichtung bezüglich der verstellbaren Bühne zwischen einer eingezogenen Position, in der sie sich auf der verstellbaren Bühne befindet, und einer ausgefahrenen Position, in der sie die Verbindung zwischen der Lade- oder Entladefläche (6) und dem Ende der genannten verstellbaren Bühne bildet, gleiten kann und daß sie mit den genannten Führungsmitteln (81, 82) mittels der Gelenkmittel (711, 721) verbunden ist, die ihr Schwenken um eine Längsachse zwischen einer um- bzw. heruntergeklappten Position auf der Bühne und einer ausgefahrenen Position, in der sie als Rollbahn verwendet werden kann, ermöglicht.

2. Vorrichtung nach Anspruch 1, dadurch gekennzeichnet, daß die Führungsmittel aus zwei unabhängigen Gleitschuhen bzw. Schlitten (81, 82) bestehen, die auf zwei Leitschienen (41, 42) geführt sind, welche in Längsrichtung auf der verstellbaren Bühne (4) befestigt sind.

3. Vorrichtung nach einem der vorgenannten Ansprüche, dadurch gekennzeichnet, daß jede Rampe (71, 72) mit einem Gleitschuh bzw. Schlitten (81, 82) durch ein Drehgelenk (711, 721), das nahe dem oberen Rand der Rampe (71, 72) angeordnet ist, verbunden ist.

4. Vorrichtung nach einem der vorgenannten Ansprüche, dadurch gekennzeichnet, daß jede Rampe (71, 72) U-Form aufweist, die es gestattet, daß die genannten Rampen eine auf die andere zwischen den Schienen (41, 42) um- bzw. heruntergeklappt werden können.

5. Vorrichtung nach einem der vorgenannten Ansprüche, dadurch gekennzeichnet, daß der Abstand zwischen den Schienen und den Gleitschuhen bzw. Schlitten kleiner ist als der Abstand zwischen den Rädern der transportierten Fahrzeuge, sodaß die Rampen zwischen diesen Rädern eingebunden werden können, bzw. einfallen können.

Fig 1

Fig 4

Fig 5

Fig 2

Fig 3

0 064 448